# EUROPEAN PATENT SPECIFICATION

(11) **EP 3 192 768 B1**
(45) Date of publication and mention of the grant of the patent: **21.07.2021**
(21) Application number: 16204577.7
(22) Date of filing: 16.12.2016
(51) Int. Cl.: B66F 9/075, B62D 51/02

(54) **RIDE-ALONG GROUND CONVEYOR VEHICLE**
MITFAHRFLURFÖRDERFAHRZEUG
VÉHICULE DE TRANSPORT D'ACCOMPAGNEMENT AU SOL

(30) Priority: 12.01.2016 SE 1650025
(43) Date of publication of application: 19.07.2017
(73) Proprietor: Toyota Material Handling Manufacturing Sweden AB, 595 81 Mjölby (SE)
(72) Inventor: HJÄLMDAHL, Alexandra, 582 52 LINKÖPING (SE)
(74) Representative: Ström & Gulliksson AB

(56) References cited:
- EP-A2- 1 505 035
- US-A1- 2009 222 167

## Description

### Technical field

The present disclosure relates to a ride-along ground conveyor vehicle.

### Background art

Ride-along ground conveyor vehicles are typically used to transport goods in e.g. warehouses, workshops or airports. The ride-along ground conveyor vehicles is a self-propelled vehicle and comprises a platform to accommodate the driver operating the conveyor vehicle. The ride-along ground conveyor vehicle is often used in situations where the driver repeatedly must leave and enter the platform, for example to pick up goods from a shelf in a warehouse and place it on a pallet on the conveyor vehicle. The ride-along ground conveyor vehicle is therefore often designed such that the driver may operate the conveyor vehicle from a standing position on the platform.

The ride-along ground conveyor vehicle may comprise various safety arrangements in order to protect the driver from falling of the platform or to protect the driver from impacts, so called side support means or side protection means. For example, the ride-along ground conveyor vehicle may comprise protective walls extending along the sides of the platform. Another type of safety arrangement is so called side bars or protective gates. These arrangements typically comprise two bars extending from the chassis of the ground conveyor on either side of the platform and at the ends of each bars is a plate shaped support arranged. An example of a protective gate is shown in EP2700610.

Ride-along ground conveyor vehicles may comprise controls for steering and acceleration integrated in the side support means. For example as disclosed in US7900734 B2 or in USD625074 S.

However, when operating a ride-along ground conveyor vehicle of this type in narrow alleys in the warehouse there is a risk that the hand of the driver may be hurt while maneuvering the control means. For example, the hand of the driver may be hit by objects around the conveyor vehicle. There is also a risk that the hand of the driver may be pinched between the outer side of the protective side support and an external object in the area around the conveyor vehicle. This could lead to serious injuries.

US2009/0222167 shows a lift truck which is designed to allow a driver, in upright standing position, to operate the lift-truck while facing the front of the lift-truck and while facing the rear of the lift truck. To provide this functionality the lift-truck comprises a primary control means 12 for control in forward driving and a secondary control means 14 for control in rearward driving.

EP1505035 shows a lift-truck that is configured to be driven in forward and backward direction. In forward driving direction, the driver faces the forks of the truck and operates a first control means 14. In backwards driving direction, the driver faces in opposite direction and operates a second control means 13.

Thus, it is an object of the present disclosure to provide an improved ride-along ground conveyor vehicle which solves or at least mitigates the problems of the prior art. In particular it is an object of the present disclosure to provide a ride-along ground conveyor vehicle which provides increased safety for a driver operating the conveyor vehicle. In detail, it is an object of the present disclosure to provide a ride-along ground conveyor vehicle of the aforementioned type in which the hands of the driver are protected when operating the control means of the ground conveyor vehicle.

### Summary of the invention

According to the present disclosure at least one of the aforementioned objects is achieved by a ride-along ground conveyor vehicle 1 comprising:
- a platform 10 for a driver 20 of the conveyor vehicle 1;
- at least a first support means 50 extending along at least a portion of a side 12, 13, 14 of the platform 10 and configured to support the driver 20 on the platform 10;
- at least one control means 40 for controlling driving direction and/or velocity of the conveyor vehicle 1 and configured to be manually maneuvered by the driver 20, wherein the control means 40 is arranged in the support means 50 characterized in that the support means 50 comprises a protective wall section 54 having an outer side 56 facing away from the conveyor vehicle 1, wherein the protective wall section 54 extends, in respect to the control means 40, such that the protective wall section 54 protects a hand 21 of the driver 20 when maneuvering the control means 40, the support means 50 comprises an attachment surface 53, wherein the control means 40 is attached to the attachment surface 53 and wherein the attachment surface 53 is configured to support a portion of an arm 22 and/or a hand 21 of the driver 20 when maneuvering the control means 40 and wherein the support means 50 is joined to the conveyor vehicle 1 by a rod 60, wherein the rod 60, is joined to a chassis 5 of the conveyor vehicle 1 by a first end of the rod 60 and the support means 50 is joined to a second end of the rod 60.

The protective wall section thus extends between the control means and the surroundings of the conveyor vehicle and ensures that the hand of the driver, when operating the control means, is not exposed to objects in the surroundings of the conveyor vehicle which could hurt the driver's hand.

In particular, the protective wall section 54 has an outer side 56, directed away from the conveyor vehicle and an inner side 55 which is directed towards the driver, when riding on the platform. By arranging the control means 40 at the inner side 55 of the protective wall section 54 is achieved that the hand of the driver is fully protected and also prevented from ending up on the outer side of the support means which could result in pinch damages to the hand.

According to one alternative, the protective wall section 54 is a discrete protective wall section which is attached to, or formed integral with, the support means. This allows for customized design of the protective wall segment to suit selected types of conveyor vehicles or drivers. By discrete protective wall section is meant that the protective wall section 56 is an additional feature to the support means 50.

According to one alternative, the protective wall section 54 is a portion of the support means 50. The control means 40 is thereby arranged at the inner side 51 of the support means 50, such that a portion of the support means 50 form a protective wall section 56 for the hand of the driver. This design is cost effective and compact since no additional, separate components are needed for the protective wall section.

According to one alternative, the conveyor vehicle comprises a first and a second support means 50 which extend along opposite sides 13, 14 of the platform 10. A first control means 40 may be arranged in the first support means 50 and a second control means 40 in the second support means 50. Accordingly, the first support means 50 comprises a first protective wall section 54 and the second support means 50 comprises a second protective wall section 54, wherein the first and the second protective wall sections 54, 54 respectively extends in respect to the first and the second control means 40, 40 such that the first and the second protective wall section 54, 54 respectively protects a hand of the driver 20 when maneuvering the control means 40.

This arrangement ensures that the driver keeps both hands within a respective protective wall segment when riding on the conveyor vehicle.

### Definitions

When directions such as "vertical" or "upwards/downwards" are used in the present disclosure these are intended to be understood in relation to the ground on which the conveyor vehicle is standing. Thus, by "vertical" or "upwards/downwards" is meant a direction towards, respectively away from, the ground on which the conveyor vehicle is standing.

### Brief description of the drawings

Figure 1: A schematic drawing of a ride-along ground conveyor vehicle according to a first example of the present disclosure.
Figure 2: A schematic drawing of a support means of a conveyor vehicle according to one alternative example of the present disclosure.
Figure 3: A schematic drawing of a support means of a conveyor vehicle according to a second alternative example of the present disclosure.
Figure 4: A schematic drawing of a conveyor vehicle comprising a support means according to the second alternative example of the present disclosure.
Figure 5: A schematic drawing of a conveyor vehicle according to the invention.
Figure 6, 7: Schematic drawings of alternatives of support means of a conveyor vehicle according to the invention.

### Detailed description of embodiments

The ride-along ground conveyor vehicle according to the present disclosure will now be described more fully hereinafter. The ride-along ground conveyor vehicle according to the present disclosure may however be embodied in many different forms and should not be construed as limited to the embodiments set forth herein. Rather, these embodiments are provided by way of example so that this disclosure will be thorough and complete, and will fully convey the scope of the present disclosure to those persons skilled in the art. Same reference numbers refer to same elements throughout the description.

A ride-along ground conveyor vehicle is a self-propelled vehicle, configured for transporting goods and is operated by a driver riding on a platform on the conveyor vehicle. One example of a ride-along ground conveyor vehicle is a lift-truck, which is configured to engage and lift a load. One example of a lift-truck is a forklift truck which comprises a load engagement means in the form of a lifting fork. However, a lift-truck may also comprise other types of load engagement means such as clamping means which are configured to be moved towards each other to grip and clamp a load to be lifted. The platform of the lift-truck may be firmly fixed to the chassis of the lift-truck or pivotally attached thereto. Examples of lift-trucks are stacker lift-trucks or order picker lift-trucks. Another example of ride-along ground conveyor vehicle is towing-tractors, which are used to transport goods in airports or in workshops. The towing-tractor may thereby comprise a load engagement means in the form of a towing hook. Also a towing-tractor comprises a platform for supporting the driver while operating the towing-tractor.

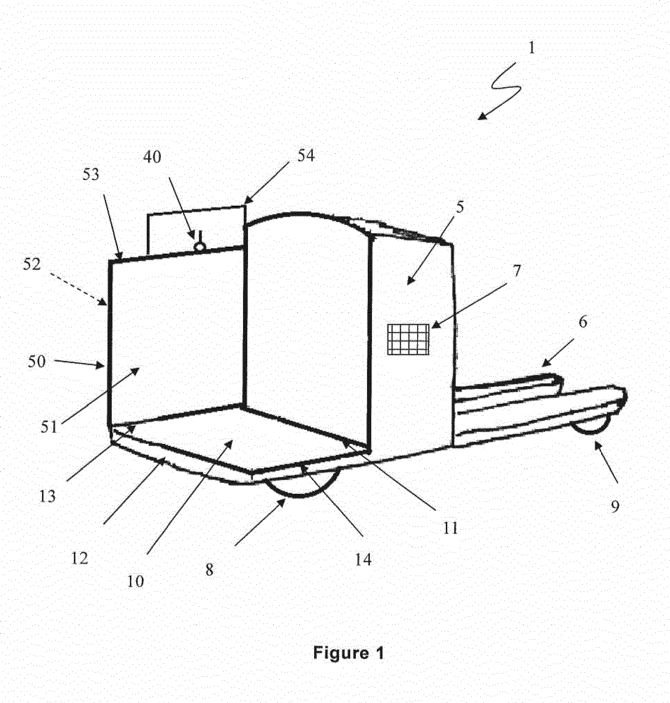

In the following description "ride-along ground conveyor vehicle" will be referred to as "conveyor vehicle"
Figure 1 shows schematically a conveyor vehicle 1 according to a first embodiment of the present disclosure in the form of a forklift-truck. The conveyor vehicle 1 comprises a drive wheel 8 which is driven by an electrical motor 7 which is arranged in a chassis 5. The conveyor vehicle 1 comprises a load engagement means 6 in the form a lifting fork. The load engagement means 6 is supported on support wheels 9 and is arranged to be raised above the ground. For example by a link-arrangement coupled to the support wheels (not shown). The chassis 5 may also comprise further conventional components for driving and controlling the conveyor vehicle.

The conveyor vehicle 1 further comprises a platform 10 for supporting a driver riding on the conveyor vehicle. In figure 1, the chassis 5 has opposing first and second sides and the load engagement means 6 are arranged on the first side on the chassis 5 and the platform 10 on the opposite second side of the chassis 5. The platform 10 thereby comprises a front side 11 which is joined the second side of the chassis 5. The platform 10 may thereby be firmly attached to the chassis. The platform 10 has a rear side 12 which is opposite to the front side 11 of the platform 10. The platform 10 further comprises two opposing longitudinal sides 13, 14 which extend between the front side 11 and the rear side 12 of the platform 10, respectively.

The conveyor vehicle 1 further comprises a first support means 50 for supporting a driver standing on the platform. The support means 50 may also be referred to as side support means or side protection means. The support means may also be so called back rest, which is a wall extending from the rear side 12 of platform (not shown). The support means 50 is thereby arranged to extend along at least a portion of at least one of the opposing longitudinal sides 13, 14 of the platform or along at least a portion of the rear side 12 of the platform. In order not to obscure other details of the conveyor vehicle of figure 1, only one support means 50 is shown. The first support means 50 extends along the first longitudinal side 13 of the platform. However, a second support means 50 may be arranged to extend along the second longitudinal side 14 of the platform 10. The first and second support means 50 typically extends from the front side 11 of the platform towards the rear side 12 of the platform. The support means 50 may thereby extend along the entire longitudinal sides 13, 14 of the platform 10 or along a portion thereof. The support means 50 comprises an outer side 52 which is directed away from the conveyor vehicle and an opposing inner side 51 which is directed towards the driver, when riding on the platform. The support means 50 further comprises an upper edge 53, which extends between the opposing inner and outer sides 51, 56.

In the conveyor vehicle 1 of figure 1, the support means 50 is a wall, which extends vertically from the first longitudinal side 13 of the platform 10. It is appreciated that the wall extends sufficiently from the platform to protect the driver from falling of the platform, typically the support means 50 may extend at least to the waist of the driver.

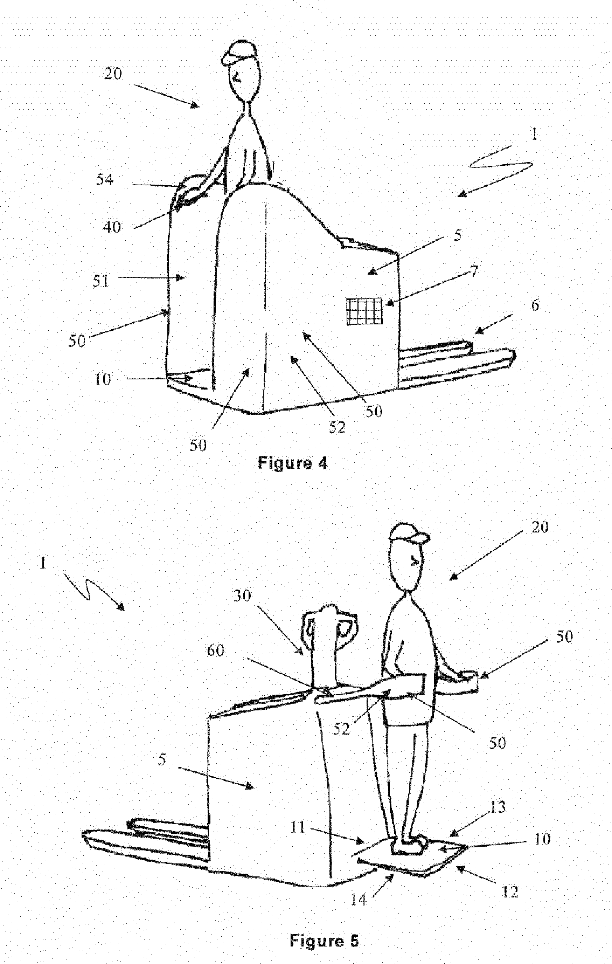

The support means 50 may also be a protective gate, in which the support means are arranged at the ends of bars, extending from the front side 11 of the platform towards rear side 12 of the platform (see figure 5).

The conveyor vehicle 1 further comprises at least one control means 40 for controlling velocity and/or driving direction of the conveyor vehicle. The control means 40 is configured to be maneuvered manually, i.e. by hand. The control means 40 is connected to the electrical motor 7 and the drive wheel 8 of the conveyor vehicle via appropriate electronic or mechanically arrangements (not shown). According to one alternative, one single control means 40, which may be operated by one hand of the driver, is provided to control both velocity and driving direction of the conveyor vehicle. According to another alternative, two separate control means 40 may be provided whereby one separate control means 40 may be configured to control the velocity of the conveyor vehicle and another separate control means 40 may be configured to control driving direction of the conveyor vehicle. One control means 40 may thereby be arranged to control the rotational speed and direction of rotation of the drive wheel and one control means 40 may be arranged to control the angular position of the drive wheel and/or the support wheels.

The control means 40 is arranged in the support means 50 such that it may be operated manually by one hand of a driver standing on the platform 10 of the conveyor vehicle. The control means 40 may thereby be arranged on the upper edge 53 of the support means 50 as shown in figure 1. Alternatively, the control means 40 may be arranged at the inner side 51 of the side support 50.

According to the disclosure, the support means 50 comprises a protective wall section 54 which extends, with respect to the control means 40, such that the protective wall section 54 protects the hand of the driver of the conveyor vehicle 1 when maneuvering the control means 40.

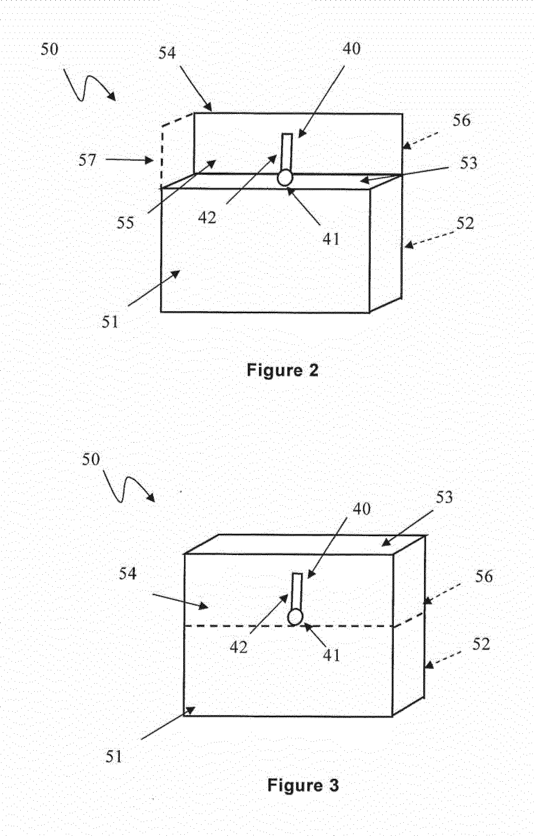

Figure 2 shows a detailed view of a portion of the support means 50 of the conveyor vehicle 1 of figure 1 including the control means 40 and the protective wall section 54. The control means 40 have an attachment portion 41 by which the control means 40 is attached to the support means 50. In the embodiment shown in figure 2, the control means 40 is attached to the upper edge 53 of the support means 50. The upper edge thereby forms an attachment surface 53 for the control means 40. The control means 40 further has an actuator portion 42 which is configured to be engaged and maneuvered by the hand of a driver of the conveyor vehicle. The control means 40 may thereby be any type of knob, button, joystick, lever, roller ball or the like.

In figure 2, the protective wall section 54 is a flat elongate wall having an outer side 56 and an inner side 55. The protective wall section 54 extends upwards from the upper edge 53 of the support means 50, i.e. vertically away from upper edge of the support means 50. The protective wall section 54 further extends along a portion of the upper edge 53 of the support means or along the entire upper edge 53. The outer side 56 of the protective wall section 54 is directed away from the conveyor vehicle 1 and the inner side 55 of the protective wall section 54 is directed towards the driver when riding on the platform 10.

The control means 40 is thereby arranged at the inner side 55 of the protective wall section 54 such that the outer side of the protective wall section 54 extends along the hand of a driver maneuvering the control means 40 and thus protects, i.e. covers, the hand of a driver when maneuvering the control means 40. Preferably, the protective wall 56 extends such that the entire hand of the driver is protected.

In detail, the protective wall section 54 extends a predetermined distance above the control means 40. The protective wall section 54 thereby extends a predetermined distance above the attachment portion 41 of the control means 40 such that the protective wall section 54 extends beyond the control means 40 and the hand of a driver maneuvering the control means 40. The protective wall section 54 further extends a predetermined distance on either side of the attachment portion 41 of the control means.

The exact extension of the protective wall section 54 may be determined by the skilled person in view of e.g. average hand sizes and the design of the control means 40.

The support means 50 may further, optionally, comprise a protective front wall section 57 which is configured to extend in front of the hand of a driver when maneuvering the control means 40. As shown in figure 2, the protective front wall section 57 extends from the protective wall section 56 in front of the attachment portion 41 of the control means 40.

In figure 2, the protective wall section 54 is a discrete protective wall section which may be provided separately and attached to the support means by e.g. welding or bolting. A discrete protective wall section 54 may also be formed integrally with the support means 50, e.g. by moulding. The attachment surface 53 formed by the upper edge of the support means 50 may be configured to support the hand or the arm of the driver while operating the control means 40. This ensures a comfortable working position for the driver while operating the conveyor vehicle.

Alternative arrangements of the protective wall section 54 and the support means 50 are possible. For example, the protective wall section 54 may extend from the outer side 52 or from the inner side 51 of the support means 50. The protective wall section 54 may thereby be attached to, or formed integral with, a portion of the inner- or outer side of the support means 50. It is also possible to attach the control means 40 at the inner side 55 of the protective wall 54. The control means 40 may thereby be attached directly to the inner side 55 of the protective wall 54 or to an attachment surface, such as a bracket, extending from the inner side 55 of the protective wall 54. Alternatives are not shown in figures 2 and 3.

Figure 3 shows an alternative support means 50 of the conveyor vehicle of figure 1. In this case the control means 40 is arranged at the inner side 51 of the support means 50 such that a portion of the support means forms 50 a protective wall section 54 for protecting the hand of a driver when maneuvering the support means 40. The control means 40 may thereby be attached, by its attachment portion 41, to the inner side 51 of the support means 50. Alternatively, the inner side 51 of the support means 50 may comprise a bracket (not shown) having an attachment surface 53 whereby the control means 40 is attached, by its attachment portion 41, to the attachment surface 53. The extension of the protective wall section 54 of the support means 50 shown in figure 3 corresponds to the description of the support means 50 of figure 2. It is appreciated that when the control means 40 is arranged at the inner side 55 of the support means 50, the extension of the protective wall 54 with regards to the control means 40 may be influenced by the position of the control means 40.

Figure 4 shows a conveyor vehicle 1 comprising a control means 40 arranged at the inner side 51 of the support means 50 as described under figure 3.

Figure 5 shows a conveyor vehicle 1 according to the invention. The conveyor vehicle 1 comprises a first and a second support means 50 in the form of a protective gate for supporting the driver when riding on the platform 10. The support means 50 is thereby attached to one end of a rod 60. The other end of the rod 60 is joined to the chassis 5 of the conveyor vehicle 1 such that the rod 60 and the support means 50 extend in direction from the front side 11 of the platform 10 towards the rear side 12 of platform. The first and the second support means 50 extend along an opposing side 13, 14 of the platform, respectively. At least one control means 40 for controlling velocity and/or driving direction of the conveyor vehicle 1 is arranged in at least one of the support means 50 (not shown).

According to one alternative (not shown), the support means 50 of figure 5 may be elongate and of a generally flat shape and having an inside 51 and an outside 52. Thus, the support means 50 may be flat elongated plates, such as rectangular shaped plates. According to one alternative, the generally flat types of support means 50 may be provided with discrete protective wall sections 54 as described under figure 2. According to a second alternative the control means 40 may be arranged on the inner side of the generally flat support means 50 such that the support means form a protective wall section 54 as described under figure 3.

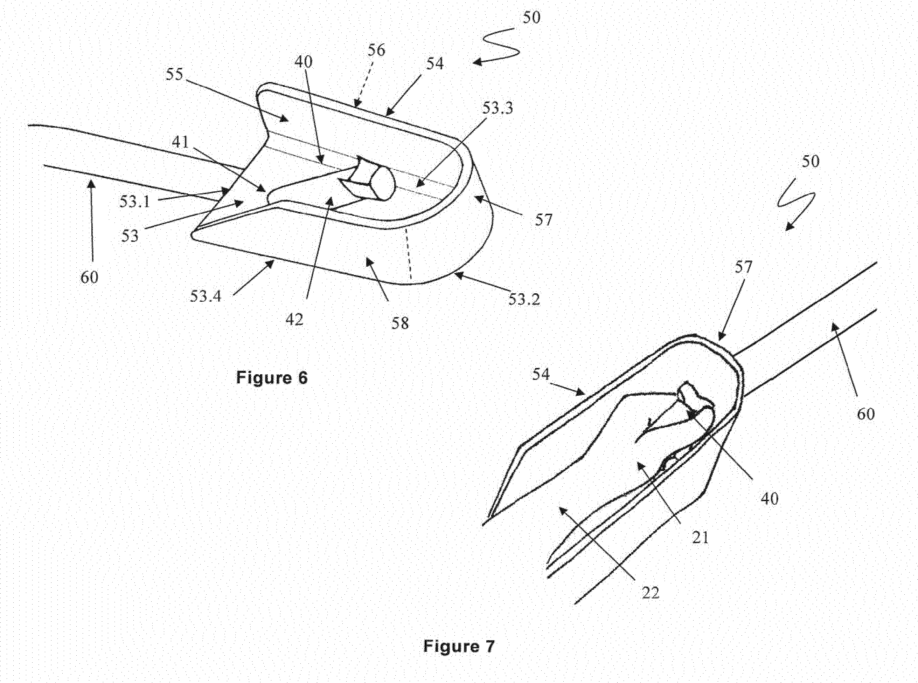

Figure 6 shows an alternative support means 50 for the conveyor vehicle 1 of figure 5. The support means 50 comprises a flat elongate attachment surface 53 which is configured to support a portion of an arm and/or a hand of the driver (not shown). A control means 40 is attached by its attachment portion 41 to the attachment surface 53. The attachment surface 53 has a rear end 53.1 and a forward end 53.2 and two opposing long sides 53.3, 53.4. The rear end 53.1 of the attachment surface 53 is open to allow the hand and arm of the driver to be comfortably supported on attachment surface 53. The support means 50 comprises a protective wall segment 54 which extends along the first long side 53.2 of the attachment surface 53 to form a protective wall for the hand of a driver maneuvering the control means 40. The support means 50 may further, optionally, comprise a protective front wall section 57 which extends along the front end 53.2 of the attachment surface 53. Thus, the front wall section 57 extends in front of the attachment 41 portion of the control means 40. The support means 50 may further optionally comprise an auxiliary wall section 58 which extends along the second long side 53.4 of the attachment surface 53. In operation, the auxiliary wall section 58 is positioned between the driver and the control means 40 and ensures that the hand of the driver rests securely and comfortably on the attachment surface 53. The support means 50 shown in figure 6 is configured to be operated by a driver which is riding on the platform with his back towards the chassis 5 and his face towards the rear end of the platform (see figure 5). The rod 60 which joins the support means 50 to the chassis therefore extends from the open end 53.2 of the attachment surface 53. However, the support means 50 described under figure 6 may also be configured for a driver which is riding on the platform 10 with his back towards the rear end of the platform 10 and the face towards the chassis 5.

Figure 7 shows a support means 50 as described under figure 6 which is configured for a driver which is riding on a platform 10 of a conveyor vehicle with his back towards the rear side of the platform 10 and the face towards the chassis 5. Thus, in figure 7 the rod 60 for joining the support means 50 to a chassis extends from the protective front wall section 57. Figure 8 further shows the arm 22 and the hand 21 of a driver while maneuvering the control means 40. Figure 7 further illustrates the extension of the protective wall segment 54 with regards to the control means such that the hand of the driver is fully protected by the protective wall segment 54.

As described above with reference to the various embodiments and alternatives of the conveyor vehicle, the conveyor vehicle may comprise more than a first support means 50. For example the conveyor vehicle may comprise a first and a second support means 50 which respectively extends along at least a portion of a respective side 12, 13, 14 of the drivers platform and are configured as described above. For example, a first and a second support means 50 may extend respectively along opposite first and second sides 13, 14 of the drivers platform. A first control means 40 may thereby be arranged in the first support means 50 and a second control means 40 may be arranged in the second support means 50. The first and the second support means 50 may thereby respectively comprise a protective wall section 54, as described above, which extends in respect to the respective first and second control means 40 such that the respective protective wall sections 54 each protects one hand 21 of the driver maneuvering the control means 40. It is appreciated that the conveyor vehicle also may comprise a third support means 50 which extends along at least a portion of a side 12, 13, 14 of the drivers platform and that may comprise a control means 40 and a protective wall section 54. It is further appreciated that a first and a second support means 50 may extend along adjacent sides 12, 13, 14 of the drivers platform, such as along the rear side 12 and one of the opposing sides 13, 14.

Although particular embodiments have been disclosed in detail this has been done for purpose of illustration only, and is not intended to be limiting. In particular it is contemplated that various substitutions, alterations and modifications may be made within the scope of the appended claims.
For example, while the platform 10 in the present disclosure is depicted in rectangular shape it may also have other forms. For example have a semi-circular shape. In the context of platforms having other shapes than rectangular, the support means may be designed to extend in a manner which corresponds to the shape of the platform, for example the support means may extend in a curved manner to follow a portion of a respective opposing side of the platform in direction from the front side of the platform towards its rear side.

It is also possible use control means 40 which are arranged in the support means 50 as disclosed above as secondary control means in combination with a conveyor vehicle 1 which comprises a further primary control means 30 for controlling velocity and driving direction of the conveyor vehicle. For example the conveyor vehicle 1 of figure 5, may, optionally, be provided with a primary control means 30 that is arranged in the chassis 5 of the conveyor vehicle. The primary control means 30 is mainly intended to be used for driving the conveyor vehicle by the driver when standing with the face in direction of the chassis 5. The secondary control means 40, which is arranged in at least one of the first and second support means 50, is thereby intended be used by the driver when standing with the back towards the chassis, for example while driving the conveyor vehicle in reverse.. The advantage thereof is that the driver may operate the conveyor vehicle while driving in reverse without being forced to turn his torso in an ergonomically improper position.

Moreover, although specific terms may be employed herein, they are used in a generic and descriptive sense only and not for purposes of limitation. Furthermore, as used herein, the terms "comprise/comprises" or "include/includes" do not exclude the presence of other elements. Finally, reference signs in the claims are provided merely as a clarifying example and should not be construed as limiting the scope of the claims in any way.

## Claims

1. A ride-along ground conveyor vehicle (1) comprising:
- a platform (10) for a driver (20) of the conveyor vehicle (1);
- at least a first support means (50) extending along at least a portion of a side (12, 13, 14) of the platform (10) and configured to support the driver (20) on the platform (10);
- at least one control means (40) for controlling driving direction and/or velocity of the conveyor vehicle (1) and configured to be manually maneuvered by the driver (20), wherein the control means (40) is arranged in the support means (50), and wherein the support means (50) comprises a protective wall section (54) having an outer side (56) facing away from the conveyor vehicle (1), wherein the protective wall section (54) extends, in respect to the control means (40), such that the protective wall section (54) protects a hand (21) of the driver (20) when maneuvering the control means (40), **characterized in that** the support means (50) comprises an attachment surface (53), wherein the control means (40) is attached to the attachment surface (53) and wherein the attachment surface (53) is configured to support a portion of an arm (22) and/or a hand (21) of the driver (20) when maneuvering the control means (40) and wherein the support means (50) is joined to the conveyor vehicle (1) by a rod (60), wherein the rod (60), is joined to a chassis (5) of the conveyor vehicle (1) by a first end of the rod (60) and the support means (50) is joined to a second end of the rod (60).

2. The ride-along ground conveyor vehicle (1) according to claim 1, wherein the protective wall section (54) is configured to extend along the hand of the driver (20) when maneuvering the control means (40) and configured to extend a predetermined distance above the control means (40).

3. The ride-along ground conveyor vehicle (1) according to claim 1 or 2, wherein the protective wall section (54) comprises a front wall section (57) configured to extend in front of the hand (21) of the driver (20) when maneuvering the control means (40).

4. The ride-along ground conveyor vehicle (1) according to anyone of claims 1 - 3, wherein the protective wall section (54) extends from the attachment surface (53).

5. The ride-along ground conveyor vehicle (1) according to anyone of claims 1 - 4, wherein the protective wall section (54) is a discrete protective wall section (54).

6. The ride-along ground conveyor vehicle (1) according to anyone of claims 1 - 3, wherein the protective wall section (54) is a portion of the support means (50).

7. The ride-along ground conveyor vehicle (1) according to anyone of claims 1 - 6 comprising a second support means (50), wherein the first and the second support means (50) extend on opposite sides (13, 14) of the platform (10).

8. The ride-along ground conveyor vehicle (1) according to claim 7, wherein a first control means (40) is arranged in the first support means (50) and a second control means (40) is arranged in the second support means (50).

9. The ride-along ground conveyor vehicle (1) according to anyone of claims 1 - 8, wherein the conveyor vehicle (1) is a lift-truck comprising load engagement means (6) arranged to be raised or lowered in a vertical direction.

10. The ride-along ground conveyor vehicle (1) according to anyone of claims 1 - 9, wherein the conveyor vehicle (1) is a towing-tractor comprising a load engagement means configured to engage and tow a carriage.

## Patentansprüche

1. Mitfahrflurförderfahrzeug (1), umfassend:
- eine Plattform (10) für einen Fahrer (20) des Förderfahrzeugs (1);
- mindestens ein erstes Stützmittel (50), das sich entlang mindestens eines Abschnitts einer Seite (12,13,14) der Plattform (10) erstreckt und zum Stützen des Fahrers (20) auf der Plattform (10) ausgebildet ist;
- mindestens ein Steuermittel (40) zur Steuerung von Fahrtrichtung und/oder Geschwindigkeit des Förderfahrzeugs (1) und ausgebildet, um von dem Fahrer (20) manuell manövriert zu werden, wobei das Steuermittel (40) in dem Stützmittel (50) angeordnet ist, und wobei das Stützmittel (50) einen Schutzwandabschnitt (54) aufweist, der eine von dem Förderfahrzeug (1) abgewandte Außenseite (56) aufweist, wobei sich der Schutzwandabschnitt (54), in Bezug auf das Steuermittel (40), so erstreckt, dass der Schutzwandabschnitt (54) eine Hand (21) des Fahrers (20) beim Manövrieren des Steuermittels (40) schützt,
**dadurch gekennzeichnet, dass** das Stützmittel (50) eine Befestigungsfläche (53) umfasst, wobei das Steuermittel (40) an der Befestigungsfläche (53) angebracht ist und wobei die Befestigungsfläche (53) so ausgebildet ist, dass sie einen Abschnitt eines Arms (22) und/oder eine Hand (21) des Fahrers (20) beim Manövrieren des Steuermittels (40) stützt, und wobei das Stützmittel (50) mit dem Förderfahrzeug (1) durch eine Stange (60) verbunden ist, wobei die Stange (60) mit einem Chassis (5) des Förderfahrzeugs (1) durch ein erstes Ende der Stange (60) verbunden ist und das Stützmittel (50) mit einem zweiten Ende der Stange (60) verbunden ist.

2. Mitfahrflurförderfahrzeug (1) nach Anspruch 1, wobei der Schutzwandabschnitt (54) so ausgebildet ist, dass er sich entlang der Hand des Fahrers (20) beim Manövrieren des Steuermittels (40) erstreckt, und so ausgebildet ist, dass er sich in einem vorab festgelegten Abstand über dem Steuermittel (40) erstreckt.

3. Mitfahrflurförderfahrzeug (1) nach Anspruch 1 oder 2, wobei der Schutzwandabschnitt (54) einen vorderen Wandabschnitt (57) umfasst, der so ausgebildet ist, dass er sich vor der Hand (21) des Fahrers (20) beim Manövrieren des Steuermittels (40) erstreckt.

4. Mitfahrflurförderfahrzeug (1) nach einem der Ansprüche 1 - 3, wobei sich der Schutzwandabschnitt (54) von der Befestigungsfläche (53) erstreckt.

5. Mitfahrflurförderfahrzeug (1) nach einem der Ansprüche 1 - 4, wobei der Schutzwandabschnitt (54) ein diskreter Schutzwandabschnitt (54) ist.

6. Mitfahrflurförderfahrzeug (1) nach einem der Ansprüche 1 - 3, wobei der Schutzwandabschnitt (54) ein Abschnitt des Stützmittels (50) ist.

7. Mitfahrflurförderfahrzeug (1) nach einem der Ansprüche 1 - 6, umfassend ein zweites Stützmittel (50), wobei sich die ersten und zweiten Stützmittel (50) auf gegenüberliegenden Seiten (13,14) der Plattform (10) erstrecken.

8. Mitfahrflurförderfahrzeug (1) nach Anspruch 7, wobei ein erstes Steuermittel (40) in dem ersten Stützmittel (50) angeordnet ist und ein zweites Steuermittel (40) in dem zweiten Stützmittel (50) angeordnet ist.

9. Mitfahrflurförderfahrzeug (1) nach einem der Ansprüche 1 - 8, wobei das Förderfahrzeug (1) ein Stapler mit einem Lastaufnahmemittel (6) ist, das so ausgebildet ist, dass es in einer vertikalen Richtung anzuheben oder abzusenken ist.

10. Mitfahrflurförderfahrzeug (1) nach einem der Ansprüche 1 - 9, wobei das Förderfahrzeug (1) ein Schlepper mit einem Lastaufnahmemittel ist, das zum Ankuppeln und Schleppen eines Fahrgestells ausgebildet ist.

## Revendications

1. Véhicule de transport (1) d'accompagnement au sol comprenant :
- une plateforme (10) pour un conducteur (20) du véhicule de transport (1) ;
- au moins un premier moyen de support (50) s'étendant le long d'au moins une portion d'un côté (12, 13, 14) de la plateforme (10) et configuré pour supporter le conducteur (20) sur la plateforme (10) ;
- au moins un moyen de commande (40) pour commander une direction de conduite et/ou une vitesse du véhicule de transport (1) et configuré pour être manœuvré manuellement par le conducteur (20), dans lequel le moyen de commande (40) est agencé dans le moyen de support (50), et dans lequel le moyen de support (50) comprend une section paroi protectrice (54) ayant un côté extérieur (56) faisant face à distance du véhicule de transport (1), dans lequel la section paroi protectrice (54) s'étend, par rapport au moyen de commande (40), de telle sorte que la section paroi protectrice (54) protège une main (21) du conducteur (20) lorsqu'il manœuvre le moyen de commande (40), **caractérisé en ce que** le moyen de support (50) comprend une surface de fixation (53), dans lequel le moyen de commande (40) est fixé à la surface de fixation (53) et dans lequel la surface de fixation (53) est configurée pour supporter une portion d'un bras (22) et/ou une main (21) du conducteur (20) lorsqu'il manœuvre le moyen de commande (40) et dans lequel le moyen de support (50) est assemblé avec le véhicule de transport (1) par une tige (60), dans lequel la tige (60) est assemblée avec un châssis (5) du véhicule de transport (1) par une première extrémité de la tige (60) et le moyen de support (50) est assemblé avec une seconde extrémité de la tige (60).

2. Véhicule de transport (1) d'accompagnement au sol selon la revendication 1, dans lequel la section paroi protectrice (54) est configurée pour s'étendre le long de la main du conducteur (20) lorsqu'il manœuvre le moyen de commande (40) et configurée pour s'étendre sur une distance prédéterminée au-dessus du moyen de commande (40).

3. Véhicule de transport (1) d'accompagnement au sol selon la revendication 1 ou 2, dans lequel la section paroi protectrice (54) comprend une section paroi avant (57) configurée pour s'étendre devant la main (21) du conducteur (20) lorsqu'il manœuvre le moyen de commande (40) .

4. Véhicule de transport (1) d'accompagnement au sol selon l'une quelconque des revendications 1 à 3, dans lequel la section paroi protectrice (54) s'étend à partir de la surface de fixation (53).

5. Véhicule de transport (1) d'accompagnement au sol selon l'une quelconque des revendications 1 à 4, dans lequel la section paroi protectrice (54) est une section paroi protectrice (54) distincte.

6. Véhicule de transport (1) d'accompagnement au sol selon l'une quelconque des revendications 1 à 3, dans lequel la section paroi protectrice (54) est une portion du moyen de support (50).

7. Véhicule de transport (1) d'accompagnement au sol selon l'une quelconque des revendications 1 à 6 comprenant un second moyen de support (50), dans lequel le premier et le second moyen de support (50) s'étendent sur des côtés (13, 14) opposés de la plateforme (10).

8. Véhicule de transport (1) d'accompagnement au sol selon la revendication 7, dans lequel un premier moyen de commande (40) est agencé dans le premier moyen de support (50) et un second moyen de commande (40) est agencé dans le second moyen de support (50).

9. Véhicule de transport (1) d'accompagnement au sol selon l'une quelconque des revendications 1 à 8, dans lequel le véhicule de transport (1) est un chariot élévateur comprenant un moyen d'entrée en prise avec une charge (6) agencé pour être levé ou abaissé dans une direction verticale.

10. Véhicule de transport (1) d'accompagnement au sol selon l'une quelconque des revendications 1 à 9, dans lequel le véhicule de transport (1) est un chariot tracteur comprenant un moyen d'entrée en prise avec une charge configuré pour entrer en prise avec et tracter un chariot.
